# FASCICULE DE BREVET EUROPEEN

(11) **EP 2 208 628 B1**
(45) Date de publication et mention de la délivrance du brevet: **26.06.2013**
(21) Numéro de dépôt: 09165792.4
(22) Date de dépôt: 17.07.2009
(51) Int. Cl.: B60J 7/22

(54) **Dispositif formant une portion vitrée de pavillon de véhicule automobile, équipé d'un déflecteur**
Vorrichtung, die den verglasten Anteil eines Kraftfahrzeugdachs bildet und mit einem Abweiser ausgestattet ist
Device forming a glazed part of a motor vehicle roof, fitted with a deflector

(30) Priorité: 20.01.2009 FR 0950340
(43) Date de publication de la demande: 21.07.2010
(73) Titulaire: Advanced Comfort Systems France SAS - ACS France, 79300 Bressuire (FR)
(72) Inventeur: Desbois, Mickaël, 79200 Parthenay (FR)
(74) Mandataire: Bioret, Ludovic

(56) Documents cités:
- EP-A1- 0 399 166
- WO-A1-2008/068325
- DE-A1- 10 146 285
- DE-C1- 10 217 147
- US-A- 4 362 332

## Description

### 1. Domaine de l'invention

Le domaine de l'invention est celui des pavillons de véhicules automobiles et de leurs équipements.

Plus précisément, l'invention concerne les dispositifs totalement ou essentiellement vitrés formant au moins une partie du pavillon d'un véhicule, et comprenant au moins une ouverture coopérant avec un panneau vitré coulissant. De tels dispositifs sont conçus de façon à être solidarisés de façon affleurante à la carrosserie dudit véhicule, par exemple par collage. Dans sa position fermée, le panneau vitré coulissant est également affleurant avec le reste du dispositif (appelé panneau fixe), vu de l'extérieur du véhicule.

Par coulissant on entend dans la présente demande de brevet aussi bien le cas où le panneau vitré reste en permanence parallèle à un plan de référence (décomposition de son déplacement en deux mouvements rectilignes) ou présente un déplacement louvoyant. Dans une position ouverte, le panneau mobile est donc décalé par rapport au panneau fixe, vers l'extérieur du véhicule, ou vers l'intérieur de celui-ci, comme cela est le cas dans le cas de l'invention décrite ci-après.

### 2. Etat de la technique

### 2.1. Tendances

Une tendance actuelle, en matière de véhicule automobile, qu'il s'agisse d'une automobile, d'un véhicule utilitaire, d'un camion, ou d'un autobus, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire (polycarbonate par exemple) laissant passer les rayons du soleil.

Une autre tendance du secteur automobile est de proposer des solutions pour dégager des ouvertures dans le pavillon, notamment pour pouvoir former des modules de toit équipé d'un ouvrant.

### 2.2. Techniques classiques de toit-ouvrant

Ainsi, une technique couramment répandue pour l'ouverture et la fermeture d'ouvrants de pavillon, et notamment des panneaux transparents ou translucides de « toit ouvrant » met en oeuvre des vitres mobiles entrebâillantes, montées sur un cadre et pouvant basculer autour d'un axe solidaire du plan du pavillon pour fournir une ouverture, réduite, de la vitre.

Cette technique présente l'inconvénient de ne permettre qu'une libération partielle de l'ouverture coïncidant avec la surface de la vitre lorsque celle-ci est refermée.

Une autre technique de toit ouvrant également utilisée de façon classique consiste à rendre le panneau mobile au-dessus ou au-dessous du pavillon dans un plan sensiblement parallèle au plan du pavillon.

Ces différentes techniques supposent généralement des pavillons essentiellement tôlés, qui sont lourds et complexes à mettre en oeuvre, et ne permettent pas d'optimiser la surface vitrée. Elles ne sont pas adaptées aux pavillons vitrés, ou essentiellement vitrés, et affleurants.

### 2.3. Technique de pavillon vitré ouvrant et affleurant

Une autre technique, à laquelle l'invention s'applique plus précisément, est décrite notamment dans le document de brevet WO-2008/068325, au nom du titulaire de la présente demande de brevet. Le pavillon vitré présenté dans ce document comprend un panneau vitré fixe comportant une portion vitrée et une ouverture, et un panneau vitré mobile par rapport à la partie fixe, prévu pour pouvoir coulisser à l'intérieur du véhicule et venir obturer, ou inversement libérer progressivement l'ouverture.

Sur un plan esthétique, cette portion de pavillon vitrée présente, vu de l'extérieur, un aspect lisse, affleurant avec les portions du pavillon en carrosserie, du fait qu'aucun cadre n'est nécessaire entre la carrosserie et le panneau fixe. Un aspect affleurant est également obtenu entre le panneau fixe et le panneau vitré mobile, lorsque celui-ci obture l'ouverture formée dans le panneau fixe en s'y enchâssant, par la présence de moyens la ramenant dans le plan du panneau fixe.

Son panneau vitré mobile peut dans certains cas porter un cadre, orienté vers l'intérieur du véhicule. Il est relié à la partie fixe par des éléments fonctionnels, ou rails, qui permettent la mobilité requise et qui sont rapportés sur la face du panneau vitré fixe tournée vers l'intérieur du véhicule.

Ces rails sont solidarisés à la partie fixe (ou formés directement dans celle-ci par exemple par moulage ou surmoulage), sur la face de celle-ci orientée vers l'intérieur de véhicule. Ils permettent de contrôler d'une part le déplacement en coulissement du panneau mobile, et d'autre part le passage de ce panneau mobile du plan du panneau fixe, en position fermée, à un plan inférieur voisin, permettant le déplacement en coulissement.

### 2.4. Battement de l'air en présence d'une ouverture

Il est connu que la libération au moins partielle d'une ouverture dans un pavillon d'un véhicule donne naissance à un phénomène acoustique de battement de l'air dans l'habitacle de ce véhicule.

Ce phénomène nuit au confort des occupants. Ainsi, on a proposé de monter des déflecteurs à l'avant de l'ouverture pour créer une perturbation de l'écoulement aérodynamique affleurant l'ouverture, et atténuer le niveau acoustique du battement de l'air.

Parmi les techniques connues de déflecteur, on connaît des déflecteurs, pouvant être dressés ou à l'inverse escamotés. De tels déflecteurs peuvent être à actionnement manuel ou motorisé.

On a également proposé d'indexer la position du déflecteur à la libération ou à la fermeture d'une ouverture de toit ouvrant. Par exemple, selon une technique connue, le déflecteur peut être monté articulé dans un logement affleurant avec la surface extérieure du pavillon et être repoussé hors de ce logement par l'action d'un ressort, lorsque le panneau coulissant ou basculant obturant l'ouverture ne le maintient plus dans ce logement.

Un inconvénient de ces techniques connues de déflecteurs de pavillon est souvent l'encombrement de leurs moyens d'actionnement.

Un autre inconvénient de ces techniques connues est, dans le cas où le déflecteur est monté à l'extérieur du toit, qu'il faut prévoir d'adapter la forme et l'épaisseur du pavillon pour loger le déflecteur de façon qu'il affleure avec la surface du pavillon en position escamotée.

Encore un autre inconvénient de ces techniques connues est que, dans de nombreux cas, il obstrue fortement le champ visuel et le passage de la lumière.

### 3. Objectifs de l'invention

L'invention a notamment pour objectif de pallier ces inconvénients de l'art antérieur.

Plus précisément, un objectif de l'invention est de fournir une technique de pavillon au moins partiellement vitré, qui soit le plus possible affleurant avec la carrosserie du véhicule automobile, et qui mette en oeuvre un déflecteur rétractable simple et efficace.

Ainsi, un objectif de l'invention est, selon au moins un mode de réalisation de l'invention, d'améliorer le rendu esthétique du pavillon tout en améliorant ses performances aérodynamiques.

Un autre objectif de l'invention est, selon au moins un mode de réalisation, de fournir une telle technique de pavillon qui présente des performances acoustiques acceptables par les occupants quelles que soient les dimensions de l'ouverture.

Encore un objectif de l'invention est, selon au moins un mode de réalisation, de fournir une telle technique, qui permette de simplifier la fabrication du pavillon, et donc de réduire fortement les coûts correspondants.

L'invention a également pour objectif de fournir une telle technique qui soit compacte et simple à monter sur un véhicule, sans adaptation particulière de celui-ci, ni mise en oeuvre de moyens complexes.

Un objectif particulier de l'invention est notamment, dans un mode de réalisation de l'invention, de fournir une telle technique de déflecteur dont l'écran est amovible, par exemple dans le cas où il est souhaitable de pouvoir le remplacer, et/ou optionnel et indépendant du reste du véhicule.

L'invention a encore pour objectif, selon au moins un mode de réalisation, de fournir une telle technique augmentant le clair de baie et/ou permettant la mise en oeuvre d'une ouverture maximisée.

### 4. Exposé de l'invention

Ces objectifs, ainsi que d'autres qui apparaîtront plus clairement par la suite, sont atteints à l'aide d'un dispositif formant au moins une portion d'un pavillon d'un véhicule automobile, comprenant un panneau fixe vitré et au moins un panneau mobile vitré apte à obturer une ouverture ménagée dans ledit panneau fixe, ledit panneau mobile étant guidé en coulissement à l'intérieur dudit véhicule le long de deux rails solidaires dudit panneau fixe, lesdits rails étant adaptés pour ramener ledit panneau mobile dans le plan défini par ledit panneau fixe, dans une position fermée, ledit panneau fixe étant destiné à être rapporté de façon affleurante à la carrosserie dudit véhicule par solidarisation (par exemple par collage tout autre moyen de solidarisation approprié, tel que le soudage, le clippage, le vissage,...) du contour extérieur dudit panneau fixe sur une bordure prévue à cet effet en retrait sur la carrosserie définissant un logement pour recevoir ledit contour extérieur.

L'invention vise donc notamment à proposer une amélioration de la technique de pavillon décrite dans le document de brevet WO 2008/068325 déjà mentionné.

On note que par coulissant on entend dans la présente demande de brevet aussi bien le cas où le panneau mobile vitré reste en permanence parallèle à un plan de référence (décomposition de son déplacement en deux mouvements rectilignes) que le cas où il présente un déplacement louvoyant.

Selon l'invention, un tel dispositif comprend un système déflecteur comprenant un écran mobile entre une position escamotée, dans laquelle il est logé sensiblement contre la face dudit panneau fixe tournée vers l'intérieur dudit véhicule, et une position déployée à l'extérieur dudit véhicule et des moyens d'actionnement dudit écran, coopérant avec ledit panneau mobile, et comprenant des moyens d'indexation desdites positions escamotée et déployée à des positions fermée et ouverte dudit panneau mobile, guidés dans lesdits rails par des moyens d'entraînement dudit panneau mobile.

Ainsi, on obtient une portion de pavillon simple à réaliser et à monter, offrant, lors du déplacement du véhicule, un bon confort acoustique lorsqu'on commande l'ouverture du panneau mobile.

D'autre part, le pavillon ainsi mis en oeuvre répond également aux exigences et attentes actuelles en termes notamment de surfaces vitrées, de qualité esthétique, du fait de l'aspect affleurant de la portion de pavillon, de qualités aérodynamiques, de facilité de montage et, pour certains modèles de véhicule, de poids du pavillon.

L'indexation des positions de l'écran déflecteur au déplacement du panneau mobile coulissant, ou en d'autres termes un actionnement combiné et asservi de l'écran déflecteur et du panneau mobile, qui permet de retarder le déploiement du déflecteur lors de l'ouverture, afin de libérer une ouverture suffisante dans la portion de pavillon pour laisser passer l'écran sans qu'il ne vienne buter contre le panneau coulissant, et qui permet d'anticiper l'escamotage de cet écran lors de la fermeture, afin d'éviter que sa présence au travers de l'ouverture empêche la fermeture du panneau coulissant.

En outre, l'intégration des moyens d'indexation et plus généralement des moyens d'actionnement dans les rails réduit l'encombrement du dispositif, et augmente donc le volume de l'habitacle disponible sous le panneau fixe de la portion de pavillon selon l'invention.

Selon l'invention, le dispositif comprend au moins un support fixé audit panneau fixe, présentant une lumière de guidage dans laquelle est guidé un élément de guidage solidaire dudit écran déflecteur, de façon à guider ce dernier entre ladite position escamotée et ladite position déployée.

Ces lumières de guidage permettent de contrôler le déplacement de l'écran de façon fiable et efficace.

Ladite lumière présente au moins une portion courbe.

Dans un mode de réalisation particulier, le dispositif comprend un support central et deux supports latéraux fixés audit panneau fixe présentant des lumières de guidage dudit écran sensiblement identiques. Dans ce cas, ledit support central est avantageusement non aligné avec lesdits deux supports latéraux.

Selon un aspect particulier de l'invention, lesdits moyens d'actionnement peuvent comprendre un axe de liaison solidarisant ledit écran déflecteur auxdits moyens d'indexation.

Cet axe de liaison peut notamment être guidé dans au moins une rainure rectiligne formée dans l'un desdits rails, suivant l'axe de ce dernier.

Selon une autre caractéristique de certains modes de réalisation, lesdits moyens d'indexation comprennent au moins une navette coulissant dans un desdits rails portant un levier formant verrou monté à rotation sur ladite navette.

Avantageusement, dans ce cas, ladite navette est entraînée en coulissement dans ledit rail par un ergot solidaire d'un câble d'entraînement dudit panneau mobile.

Par ailleurs, ladite navette peut comprendre des moyens de rappel agissant sur ledit ergot. Celui-ci peut notamment agir de façon à faire basculer ledit levier, en fonction de la position de la navette.

Dans un mode de réalisation particulier, ledit axe de liaison est solidarisé à un bras dudit levier.

Selon une caractéristique particulière, ladite navette peut présenter une lumière oblongue perpendiculaire à la direction dudit rail et traversée par ledit axe de liaison.

De façon à réduire l'encombrement notamment, on peut prévoir qu'au moins une portion substantielle desdits moyens d'entraînement est logée dans ledit ou lesdits rails.

Dans certains modes de réalisation, lesdits moyens d'entraînement peuvent être motorisés. Un actionnement manuel est également possible.

L'invention concerne également les véhicules automobiles comprenant au moins un dispositif tel que présenté ci-dessus.

### 5. Liste des figures

D'autres caractéristiques et avantages de l'invention apparaîtront plus clairement à la lecture de la description suivante de deux modes de réalisation particuliers de l'invention, donnés à titre de simples exemples illustratifs et non limitatifs, et des dessins annexés, parmi lesquels :
- la figure 1 illustre, dans une vue en perspective, d'un premier mode de réalisation d'une portion de pavillon selon l'invention montée sur un véhicule dans une position d'ouverture partielle ;
- la figure 2 est une vue détaillé de l'intérieur du véhicule des éléments constitutifs du système de déflecteur de la portion de pavillon selon la figure 1 ;
- les figures 3A à 3C sont des vues en dépouille d'un rail de guidage du panneau coulissant et des moyens d'indexation de la position du déflecteur respectivement en position de fermeture, avant déverrouillage et après déverrouillage de l'écran déflecteur escamoté ;
- les figures 4A à 4C illustrent un deuxième mode de réalisation de l'invention respectivement en position fermée, dans une position de déploiement partiel et en position déployée ;
- les figures 5A et 5B sont des vues de détail de côté et de dessous de la zone de l'extrémité avant d'un rail du dispositif selon l'invention présenté sur les figures 4A à 4C, en position déployée ;
- la figure 6 est une vue de détail de la zone de l'extrémité avant d'un rail du dispositif selon l'invention présenté sur les figures 4A à 4C, en position escamotée ;
- la figure 7 est une vue de détail des lumière de guidage des doigts du deuxième mode de réalisation de l'invention.

### 6. Description détaillée d'un mode de réalisation de l'invention

### 6.1. Rappel

Comme déjà indiqué, le principe général de l'invention repose sur la mise en oeuvre un dispositif formant un pavillon vitré, ou une portion de pavillon vitrée, pour véhicule automobile tel que notamment décrit dans le document de brevet WO 2008/068325, présentant une ouverture et portant un déflecteur associé à cette ouverture dont le déploiement et l'escamotage sont indexés au coulissement du panneau mobile à l'intérieur du véhicule.

Un tel dispositif permet notamment de réduire ou supprimer, sinon la présence, du moins l'impression visuelle de rupture que constitue un cadre, de manière que la surface vitrée soit perçue comme une portion transparente faisant continuité avec la carrosserie.

De façon avantageuse, l'écran de ce déflecteur peut être prévu optionnel et/ou amovible, dans des modes de réalisation particuliers de l'invention.

### 6.2. Exemple de mode de réalisation

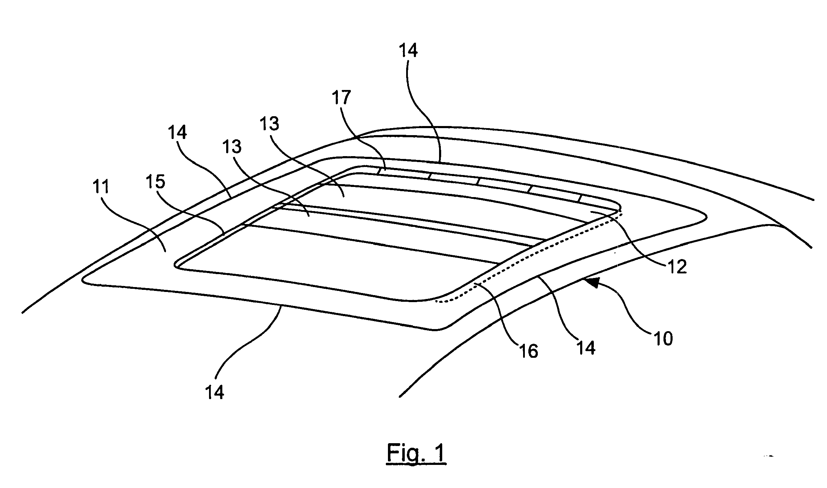

La figure 1 illustre, dans une vue en perspective, un mode de réalisation de l'invention dans lequel un dispositif formant portion de pavillon 10 (pouvant aussi être désignée par la suite sous le terme "pavillon flush") comprend un panneau vitré fixe 11, percée d'une ouverture 12, et un panneau vitré mobile 13 (représenté en position d'ouverture partielle d'environ 30%) coulissant par rapport à ce panneau fixe.

Le panneau fixe vitré 11, par exemple en verre trempé, peut être galbé, pour donner au pavillon une forme répondant aux critères actuels en termes de design, et de pénétration dans l'air. Le contour extérieur de ce panneau 11 est solidarisé de façon affleurante, par collage et/ou par tout autre moyen de solidarisation adéquat, à une bordure de réception 14 définie sur la carrosserie.

Le panneau vitré coulissant 13, réalisé par exemple en polycarbonate thermoformé, et muni d'un cadre fonctionnel s'étendant sur son contour, du côté orienté vers l'intérieur du véhicule, est guidé par rapport au panneau fixe 11 par des rails 15 et 16.

Ces rails 15 et 16 sont rapportés, par exemple par collage, soudage, vissage ou tout autre technique adaptée, sur la face du panneau vitré fixe tournée vers l'intérieur du véhicule. Ils sont placés de part et d'autre de l'ouverture 12, hors de la zone du contour extérieur du panneau 11, de façon à ne pas interférer avec la bordure de réception du panneau fixe prévue en retrait de la carrosserie, lors du montage et du collage de ce panneau sur la carrosserie.

En outre, dans le cas d'un verre trempé, les rails 15 et 16 présentent des extensions, ou des éléments de retenue, s'étendant sensiblement jusqu'à la bordure de réception 14 de sorte que les extrémités des rails puissent être solidarisés à la bordure de réception sur la carrosserie de façon à renforcer la sécurité et répondre à des exigences normatives en matière de bris de panneaux vitrés, et en l'occurrence du panneau vitré fixe 11.

Deux (ou plus) éléments de retenue (non représentés sur cette figure) sont ainsi rapportés entre chacun des rails et la bordure de la carrosserie correspondante la plus proche, perpendiculairement aux rails. Il peut également s'agir d'extensions formées dans la masse du rail, dans une variante de ce mode de réalisation. Dans tous les cas, ces éléments de retenue permettent de retenir les rails 15 et 16, et le panneau vitré mobile 13 qu'ils portent, même si le panneau fixe vitré 11 qui porte ces éléments est détruit, protégeant ainsi les occupants à l'intérieur du véhicule.

Le panneau vitré mobile 13 peut coulisser tout en étant guidé dans les rails 15 et 16 selon une direction sensiblement horizontale, dans un plan de coulissement, sensiblement parallèle au plan de la portion de pavillon 10, entre une ou plusieurs position(s) d'ouverture et une position intermédiaire de dégagement dans laquelle il est en regard de l'ouverture et dégagé de celle-ci.

Un déplacement, perpendiculaire au plan formé par le panneau fixe 11, permet le passage du panneau mobile vitré de la position intermédiaire de dégagement dans laquelle il est déverrouillé, à une position fermée, et verrouillée, dans laquelle le panneau mobile vitré se trouve dans le même plan que le panneau fixe 11, et obture l'ouverture 12.

Ce mouvement d'enchâssement vertical est avantageux, car il permet de presser uniformément le joint d'étanchéité disposé entre le cadre du panneau mobile 13 et le panneau fixe 11, ce qui réduit les risques d'apparition de défauts d'étanchéité.

Bien sûr, d'autres mouvements sont possibles. Par exemple, le mouvement du panneau vitré mobile peut suivre une courbe selon laquelle les deux mouvements (verrouillage/déverrouillage et coulissement) sont liés.

De façon à réduire les effets du battement de l'air un écran déflecteur rétractable 17 est par ailleurs déployé à l'avant de l'ouverture 12 (c'est-à-dire du côté correspondant à l'avant du véhicule), dans cette position d'ouverture.

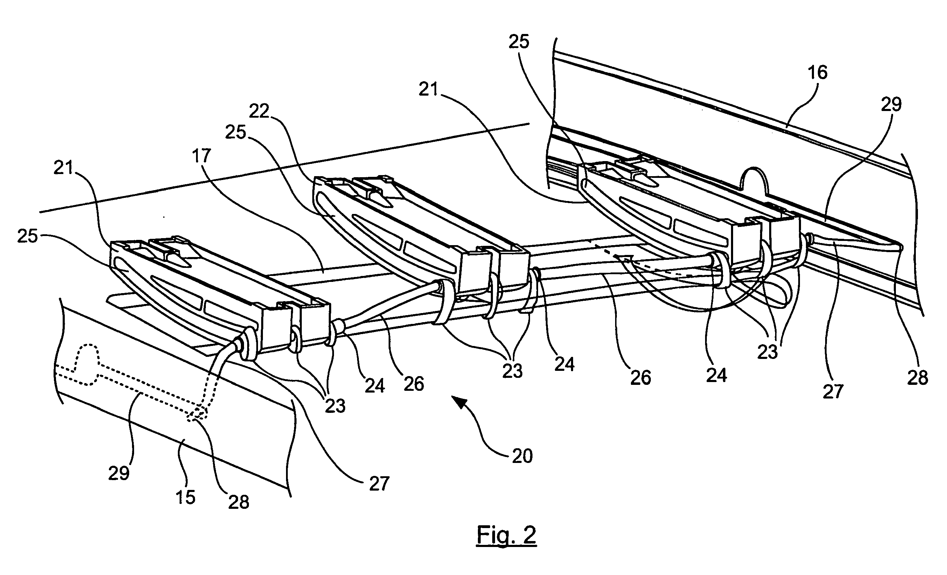

Comme on peut le voir sur la figure 2, présentant une vue depuis l'intérieur du véhicule, le système de déflecteur 20 de la portion de pavillon 10 comprend un écran déflecteur 17 porté par trois supports (dans ce mode de réalisation particulier), deux supports latéraux 21 et un support central 22. Ces supports 21, 22 sont fixés, par collage dans ce mode de réalisation, sur la face intérieure du panneau fixe 11 tournée vers l'intérieur du véhicule. Les supports latéraux 21 sont disposés symétriquement par rapport au support central 22. En outre, le support central 22 est avantageusement décalé vers l'avant du véhicule par rapport aux supports latéraux 21.

L'écran 17, qui est une pièce rigide, présente trois pattes 23 clippées chacune sur un tube 24 traversant une lumière courbe 25 formée dans un des supports 21, 22. De façon à assurer un clippage efficace, chaque patte présente une fourche clippée sur le tube 24 correspondant sur trois sections, respectivement de part et d'autre du support et dans une section intermédiaire au niveau d'une rainure formée dans le support.

D'autres modes de réalisation de la liaison entre l'écran et les supports sont bien sur envisageables.

Avantageusement, l'écran déflecteur est détachable dans ce mode de réalisation de l'invention, ce qui permet par exemple de faciliter son remplacement s'il venait à être endommagé.

Un axe de liaison 26, par exemple en acier ressort ou en plastique, est inséré dans ces tubes, de façon à les relier. Il se prolonge à partir des supports latéraux par une portion coudée 27 formant biellette dont l'extrémité 28, qui présente la forme d'un doigt, pénètre transversalement dans une rainure rectiligne horizontale 29 formée dans l'un des rails 15, 16.

La biellette 27 est par exemple réalisée en corde à piano ou en plastique.

Cet axe 26 permet de pousser ou de tirer l'écran 17, par l'intermédiaire des tubes qui sont guidés dans les lumières 25, pour le faire passer d'une position escamotée, dans laquelle il est logé à l'intérieur de l'habitacle contre les supports 21 et 22, à une position déployée partielle (telle que représentée sur la figure 2) ou complète lorsque l'ouverture 12 est libérée à plus de 60%, dans ce mode de réalisation de l'invention, et vice versa. Grâce au décalage du support central 22 par rapport aux supports 21, l'écran 17 est entraîné sans pouvoir pivoter.

La courbure des lumières 25 permet par ailleurs de redresser progressivement lors de son déploiement, ou réciproquement de progressivement coucher l'écran lorsqu'il est escamoté.

Comme on le verra par la suite, dans la position escamotée, la surface de l'écran déflecteur masque en outre les supports, ce qui est esthétique.

L'actionnement de l'écran 17 du système déflecteur 20 est obtenu en commandant le déplacement de l'extrémité 28 de l'axe 26.

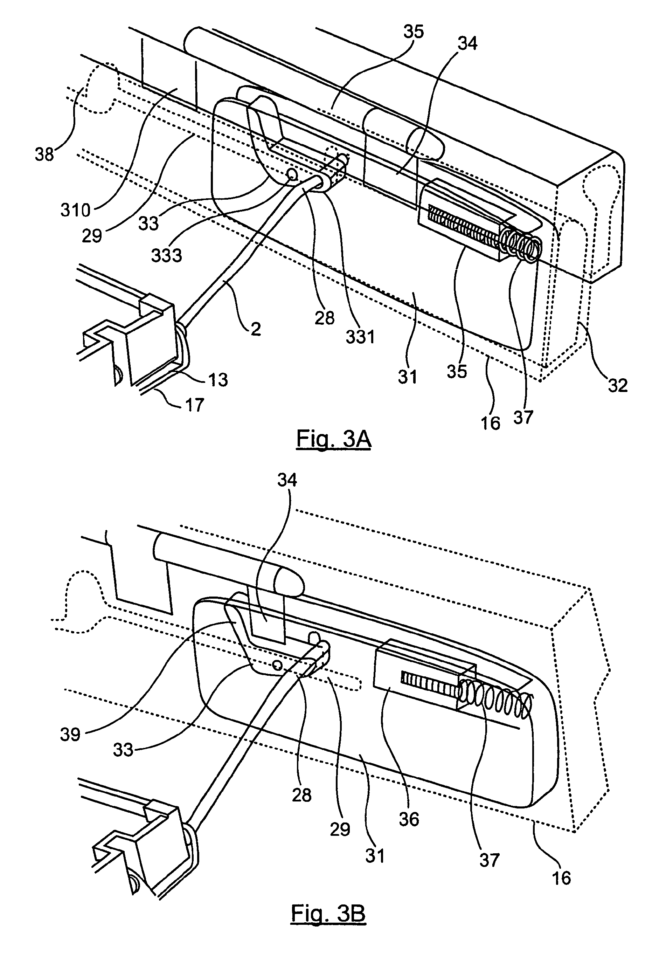

On détaille, en référence aux figures 3A à 3C, dans une vue en dépouille du rail 16, le fonctionnement du mécanisme d'actionnement et de verrouillage/déverrouillage du système déflecteur, qui contrôle l'indexation de la position de l'écran à celle du panneau vitré coulissant 13 (figure 1), lorsqu'on commande l'ouverture du pavillon à partir de la position de fermeture.

Dans la position de fermeture (figure 3A), l'écran 17 est escamoté vers l'avant à l'intérieur de l'habitacle, et l'extrémité 28, qui est solidaire d'une navette 31, encore appelé coulisseau, pouvant coulisser dans une première glissière interne 32 du rail 16, est en butée sur le fond de la rainure 29 (représentée en pointillés pour plus de lisibilité).

La solidarisation de l'extrémité 28 à la navette 31 est réalisée par l'intermédiaire d'un levier formant un verrou 33 monté pivotant autour d'un axe 333 sur la navette 31, à un premier bras 331 duquel l'extrémité 28 est articulée.

Dans cette position de fermeture, le levier est basculé vers le bas et la branche 331 repose sur la navette 31.

La navette 31 est maintenue vers l'avant, en butée contre une paroi transversale du rail, par un premier ergot surmoulé 34 sur un brin d'un câble « push-pull » 35 d'actionnement du panneau vitré coulissant, relié à un moto-réducteur (non représenté). Cet ergot 34 est plaqué contre un logement 36 d'un ressort 37, fixé par une extrémité à la navette, qu'elle maintient ainsi comprimé. Ce logement 36 empêche le flambage du ressort, et permet d'obtenir un bon appui sur l'ergot et sur le verrou, selon les positions.

Le brin de câble 35, qui s'étend vers l'arrière du véhicule, est logé dans une deuxième glissière interne de guidage formée dans le rail 16.

Lorsque la commande de l'ouverture du panneau coulissant est actionnée, le brin de câble 35 recule pour déverrouiller le panneau mobile hors de la gâche de verrouillage 38 (sous la poussée du second ergot 310), dans laquelle la rainure 29 débouche.

Le logement 36 qui suit le mouvement de l'ergot 34 recule également sous la poussée du ressort 37, qui se décomprime progressivement. Cette phase permet de réaliser un décalage temporel entre la position de l'écran déflecteur, qui reste immobile pendant cette phase, et la position du panneau coulissant, qui a été déverrouillé et a commencé à coulisser vers l'arrière, par exemple selon un mouvement louvoyant.

Après que le panneau mobile a été déverrouillé et a commencé à coulisser vers l'arrière en étant guidé dans la rainure 311 (voir la figure 3B), l'ergot 34 vient en contact avec le second bras 39 du levier 33. Dans cette position, le levier ne peut pas basculer puisque l'extrémité 29, qui est maintenue dans la rainure horizontale 28, l'en empêche. Le recul de l'ergot 34, entraîné par le câble 35, et accompagnant le coulissement du panneau mobile vers l'arrière pour ainsi libérer progressivement l'ouverture, entraîne alors vers l'arrière la navette et le doigt 28, guidé dans la rainure 29, ce qui déplace l'écran déflecteur dans la même direction.

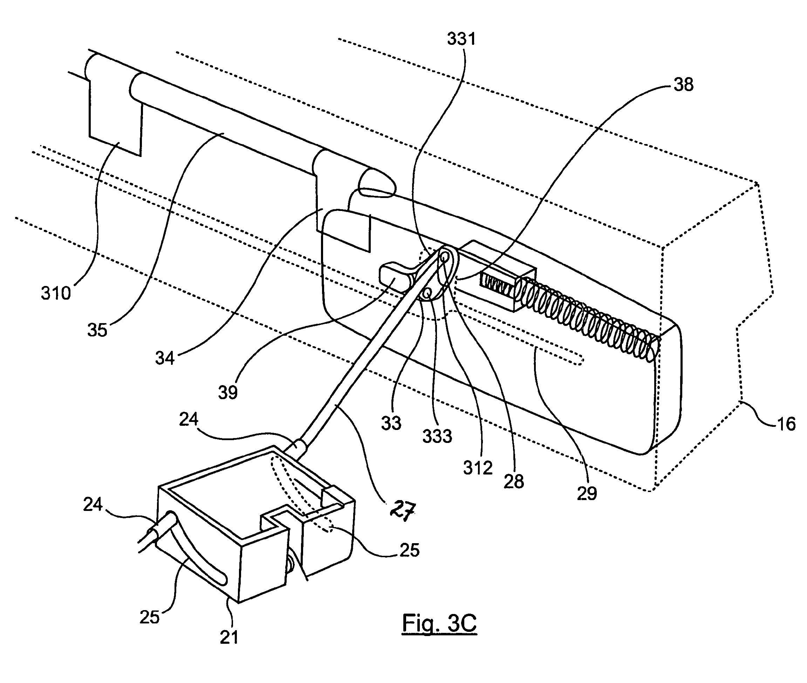

L'écran va atteindre une position déployée, dans laquelle il dépasse à l'extérieur du véhicule de façon maximale, par un mouvement sensiblement louvoyant. Dans cette position (voir la figure 3C), les tubes 24 sont en appui contre l'extrémité arrière des lumières 25, ce qui bloque le déplacement vers l'arrière de la navette. Le doigt 28, qui a quitté la rainure 29, ayant pénétré dans la gâche, la rotation du levier formant verrou 33 est libérée.

En déplaçant le câble 35 vers l'arrière pour poursuivre l'ouverture du panneau mobile, le levier 33 va progressivement basculer vers le haut sous l'action, exercée sur le bras 39, de l'ergot 34. L'ergot va donc franchir le levier et poursuivre son déplacement vers l'arrière du véhicule avec le panneau vitré coulissant.

Le doigt 28, qui est solidaire du bras 331 du levier 33, va alors se redresser verticalement, guidé dans la lumière oblongue 312 de la navette, ce qui empêche tout retour de l'écran déflecteur dans la position escamotée, puisque le doigt ne se trouve plus en face de la rainure 29. Il convient de noter que pour permettre ce déplacement du doigt, celui-ci est logé mobile dans une gorge oblongue formée sur le premier bras 331.

En outre, dans la position représentée sur la figure 3C, le verrouillage de l'écran en position, déployée est complété par la butée formée par le logement 36. Celui-ci est maintenu en appui sur la face inférieure du premier bras du levier par la poussée du ressort 37, qui reste légèrement comprimé.

On comprend aisément que lors de la fermeture du panneau vitré mobile, l'ergot 34 entraîné vers l'avant par le câble, va inversement repousser le bras 331 du levier 33 vers le bas jusqu'à l'horizontale dans une première étape, ce qui va permettre de déverrouiller l'écran 17, le doigt 28 pouvant alors à nouveau coulisser dans la rainure 29.

Dans une seconde étape, l'ergot 34 progressant vers l'avant du véhicule va repousser le logement 36, qui par l'intermédiaire du ressort 37 va communiquer à la navette 31 un déplacement vers l'avant. L'écran 17 entraîné par la navette, va progressivement glisser sous le panneau vitré fixe jusque dans la position escamotée, laissant le passage au panneau vitré mobile 13 sous l'ouverture 12 (figure 1). Le câble 35 en bout de course va verrouiller l'écran en position escamotée, en maintenant le ressort 37 comprimé sous la poussée de l'ergot 34.

### 6.3. Autre exemple de mode de réalisation

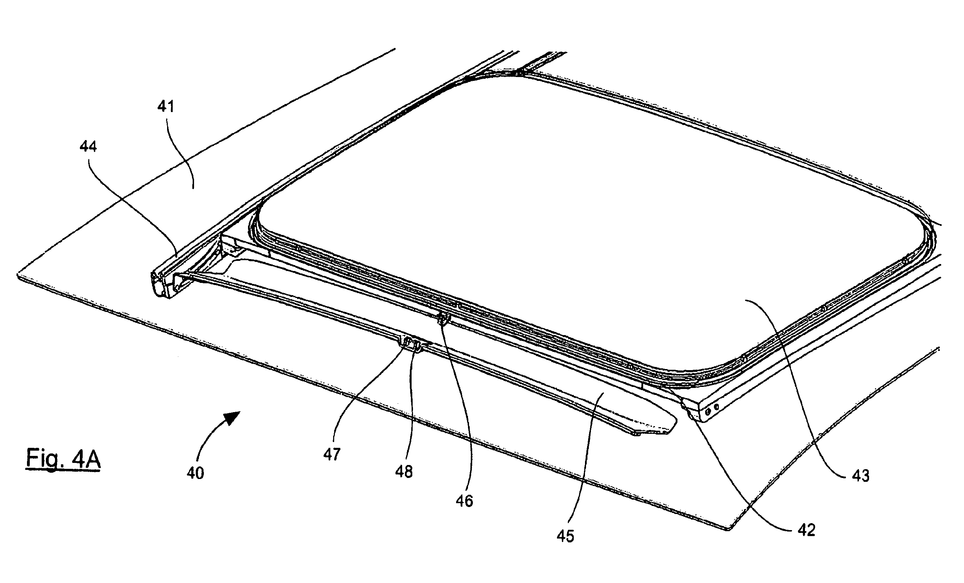

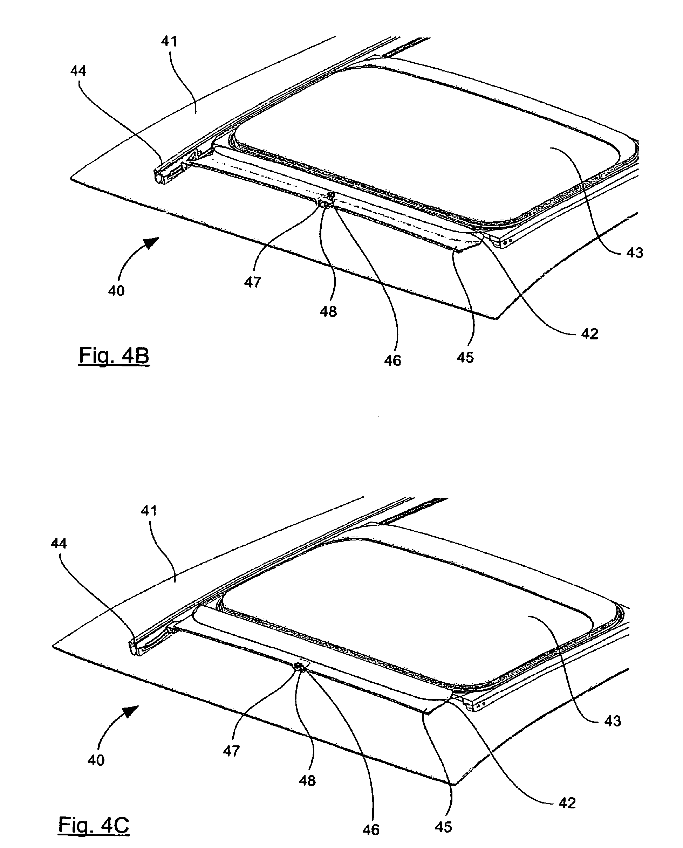

On présente en relation avec les figures 4 à 7 un deuxième mode de réalisation d'un dispositif formant portion de pavillon selon l'invention. Ce deuxième mode de réalisation présente des avantages de simplicité, notamment car il ne met pas en oeuvre une navette et permet d'utiliser des rails de formes plus simples.

Ce dispositif 40 est constitué d'un panneau vitré fixe 41, présentant une ouverture 42, d'un panneau vitré mobile 43 pouvant coulisser par rapport au panneau fixe 41 dans des rails 44 (seul le rail du côté droit du véhicule est représenté sur ces figures), et d'un écran déflecteur 45 rétractable permettant de limiter les effets du battement de l'air.

Il est représenté sur la figure 4A dans une position de fermeture de l'ouverture, dans laquelle l'écran déflecteur 45 est escamoté, et sur les figures 4B et 4C dans deux positions d'ouverture du panneau coulissant 43, dans lesquelles l'écran déflecteur 45 est en cours de déploiement et donc partiellement déployé (figure 4B) ou est totalement déployé et dépasse à l'extérieur du véhicule (figure 4C).

De même que dans le mode de réalisation précédemment décrit, le panneau mobile 43 est entraîné par un câble « push-pull » (non représenté) fixé à celui-ci.

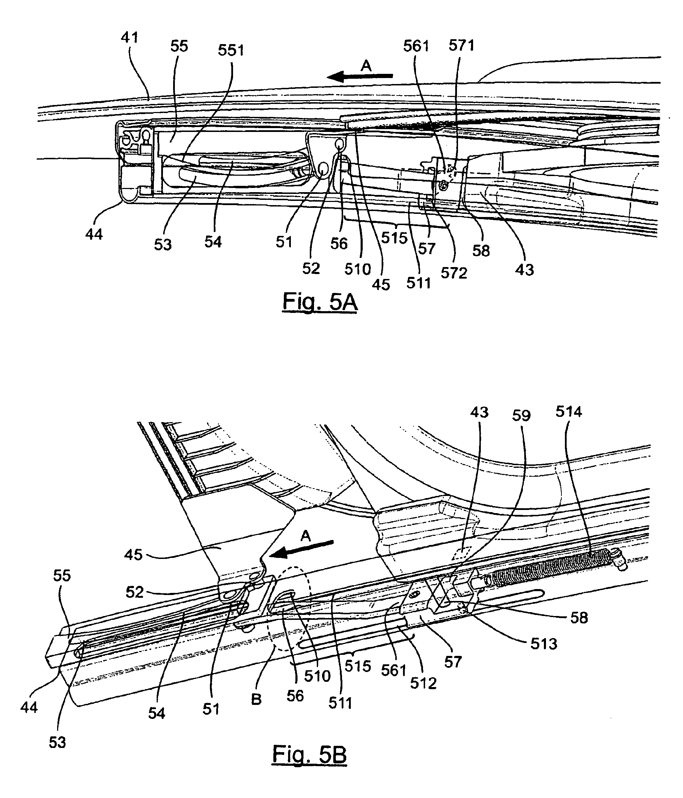

Un détail de la zone proche de l'extrémité avant du rail 44 est représenté de côté sur la figure 5A et de dessous sur la figure 5B, dans une position où l'écran déflecteur est totalement déployé.

Comme on peut le voir sur ces figures 5A et 5B, l'écran déflecteur 45 présente, sur chacun de ses côtés, deux doigts de guidage 51 et 52, qui saillissent latéralement, traversent les lumières courbes parallèles 53 et 54 formées dans un support latéral 55 correspondant, fixé sur la face intérieure du panneau fixe 41, et pénètrent à l'intérieur du rail creux 44. Ce support 55 présente un épaulement 551 sur lequel prend appui le doigt 52. Contrairement au mode de réalisation précédemment décrit, aucun support central n'est prévu dans ce deuxième mode de réalisation.

Dans une variante de ce mode de réalisation de l'invention, une unique lumière courbe peut être prévue pour guider l'écran déflecteur.

Une biellette de transmission 56 est montée articulée en rotation sur l'extrémité du doigt 51. L'autre extrémité 561 de cette biellette 56 est articulée à un patin de verrouillage 57 de l'écran autour d'un axe 571. Pour permettre le pivotement de la biellette 56 autour de l'axe 571, l'extrémité 561 de la biellette a été coudée vers le haut et le patin 57 a été évidé sur sa portion 572.

Un ressort de traction 514 est logé dans le rail 44, une de ses extrémités étant fixée au patin 57 et l'autre extrémité au rail 44.

Dans la position totalement déployée du déflecteur, représentée sur les figures 5A et 5B, le ressort 514 est au repos et non tendu, ou en d'autres termes son allongement est nul.

Dans cette même position, le patin 57 est désolidarisé du panneau mobile 43 et est immobile dans le rail 44, puisqu'il n'est pas sollicité par le ressort 514. Par conséquent, l'écran déflecteur 45 est également immobilisé dans la position déployée, puisqu'une liaison existe, par l'intermédiaire de la biellette 56, entre l'écran déflecteur 45 et le patin de verrouillage, et que l'écran ne peut pas basculer du fait que deux doigts sont mis en oeuvre pour guider chacun de ses côtés.

On note que cette immobilisation revient à un verrouillage satisfaisant du déflecteur 45 du fait que le patin 57 présente une masse suffisante pour rendre cette position stable, ou en d'autres termes peu sensible aux vibrations du véhicule.

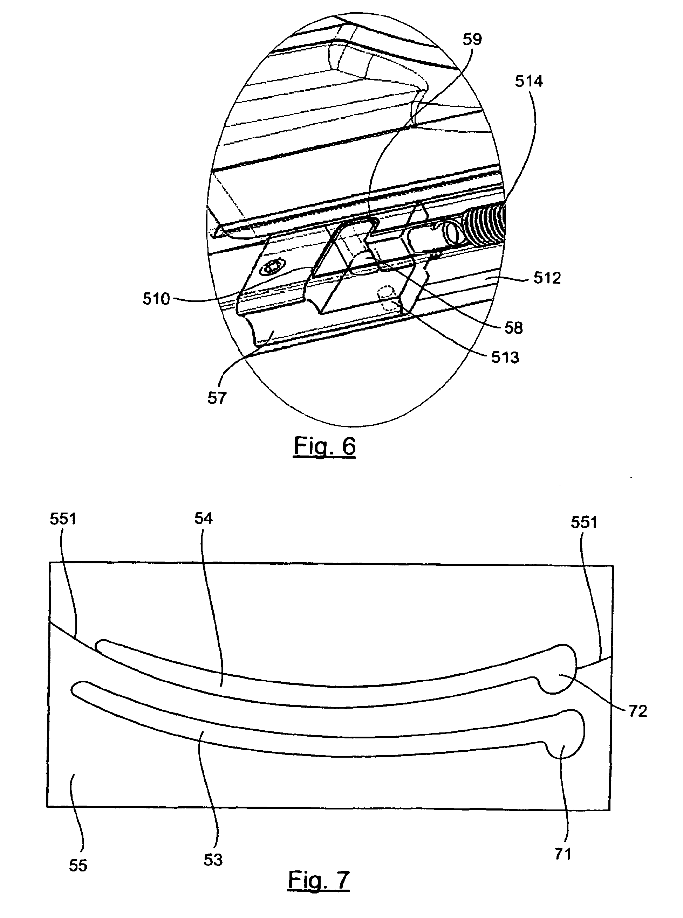

D'autre part, il a été prévu à l'extrémité arrière de chacune des lumières 53 et 54 un décrochement formant berceau 71, 72, présentant une forme d'échancrure et illustré figure 7. Ce décrochement permet de s'assurer que le déflecteur conserve la position déployée si un effort est exercé sur le déflecteur selon la direction verticale, par exemple par l'action du vent ou dans le cas où une personne ou un objet posé sur le pavillon appuie sur le déflecteur. En outre, dans cette position déployée (voir la figure 4C), l'écran déflecteur est verrouillé dans sa partie centrale à l'aide d'une gâche 46 fixée au panneau fixe du pavillon dans laquelle se coincent deux pions courts 47, 48, ou pênes, formés sur l'écran déflecteur.

Lors de la fermeture de l'ouverture à partir de la position représentée sur les figures 5A et 5B, le doigt 58 du panneau mobile 43, qui fait saillie à l'intérieur du rail hors de sa lumière de guidage 511 formée sur le flanc intérieur du rail, va venir en butée sur le patin 57. Le patin de verrouillage 57 va alors progresser avec le panneau mobile en étant poussé vers l'avant (c'est-à-dire dans la direction de la flèche A) par le doigt de guidage 58, contre lequel il demeure plaqué sous la tension du ressort de rappel 514, qui s'allonge. Plus précisément, il va coulisser sur une portion de glissière 515 du rail 44 jusqu'à la position de fermeture B indiquée par un contour en traits pointillés, dans laquelle il est en butée sur le rail.

Il convient de noter que ce patin présente un doigt 513 pénétrant dans une lumière rectiligne 512 formée sur le flanc tourné vers l'extérieur du véhicule, qui le guide lors de son coulissement dans la portion de glissière 515 et prévient son arc-boutement.

L'écran 45 va donc également progressivement s'escamoter sous le panneau fixe, la biellette 56 transmettant au doigt 51 l'amplitude de déplacement du patin 57 suivant la direction du rail. On rappelle que, simultanément, la courbure des lumières 51 et 52 permet de faire basculer l'écran déflecteur 45 et donc de redresser ou de coucher progressivement cet écran lors de son déplacement vers l'arrière ou vers l'avant du véhicule.

Ainsi le dispositif 40 permet d'indexer la position de l'écran 45 à celle du panneau mobile 43.

Lorsque le panneau mobile atteint la position de fermeture et est verrouillé en bloquant le doigt 58 dans la gâche 510, l'écran déflecteur 45 occupe la position escamotée illustrée sur la figure 4A.

Dans cette position, on peut voir, en référence à la figure 6, dans une vue de détail de la zone de l'extrémité avant du rail, que le doigt 58 est remonté dans la gorge 59, ce qui empêche tout déplacement du patin et donc verrouille efficacement l'écran 45 dans la position escamotée.

### 6.4. Autres caractéristiques optionnelles et avantages de l'invention

Dans des variantes des modes de réalisation décrits ci-dessus, il peut également être envisagé par exemple :
- d'actionner le panneau vitré mobile et le système déflecteur manuellement, par exemple à l'aide d'une poignée de commande unique ;
- de transmettre un mouvement du moto-réducteur aux éléments d'actionnement du système déflecteur et au panneau vitré mobile à l'aide d'une boucle de câble ;
- de sertir le ou les ergots sur le câble et/ou solidarisés au câble par tout autre technique connue convenable ;
- de prévoir des moyens d'actionnement et/ou d'indexation du système de déflecteur dans un seul rail, et de les solidariser à un seul côté de l'écran déflecteur ;
- de solidariser les moyens d'actionnement et/ou d'indexation du système de déflecteur à une portion sensiblement centrale de l'écran déflecteur ;
- de fixer l'écran déflecteur sur les tubes au niveau de chaque support par deux pattes formant une fourche autour de ce support ou respectivement par une patte unique guidée latéralement par le support ;

## Revendications

1. Dispositif formant au moins une portion d'un pavillon (10) d'un véhicule automobile, comprenant un panneau fixe vitré (11;41) et au moins un panneau mobile vitré (13;43) apte à obturer une ouverture (12) menagée dans ledit panneau fixe (11; 41) ledit panneau mobile (13;43) étant guidé en coulissement à l'intérieur dudit véhicule le long de deux rails (15,16,41) solidaires dudit panneau fixe (11;41), lesdits rails (15,16,44) étant adaptés pour ramener ledit panneau mobile (13,43) dans le plan défini par ledit panneau fixe (11;41), dans une position fermée,
ledit panneau fixe (11;41) étant destiné à être rapporté de façon affleurante à la carrosserie dudit véhicule par solidarisation du contour extérieur dudit panneau fixe (11;41) sur une bordure (14) prévue à cet effet en retrait sur la carrosserie définissant un logement pour recevoir ledit contour extérieur,
**caractérisé en ce qu'**il comprend :
- un système déflecteur (20) comprenant un écran (17;45) mobile entre une position escamotée, dans laquelle ledit écran (17;45) est logé sensiblement contre la face dudit panneau fixe (11;41) tournée vers l'intérieur dudit véhicule, et une position déployée à l'extérieur dudit véhicule,
- des moyens d'actionnement dudit écran (17;45), coopérant avec ledit panneau mobile (13;43), et comprenant des moyens d'indexation desdites positions escamotée et déployée à des positions fermée et ouverte dudit panneau mobile (13;43), guidés dans lesdits rails (15, 16; 44) par des moyens d'entraînement dudit panneau mobile (13;43),
- au moins un support (21; 22; 55) fixé audit panneau fixe (11;41), présentant une lumière (25;53;54) de guidage dans laquelle est guidé un élément de guidage (24;51,52) solidaire dudit écran déflecteur (17;45), de façon à guider ce dernier entre ladite position escamotée et ladite position déployée, ladite lumière (25;53,54) de guidage présentant au moins une portion courbe (25;53,54).

2. Dispositif selon la revendication 1, **caractérisé en ce qu'**il comprend un support central (22) et deux supports latéraux (21) fixés audit panneau fixe (11) présentant des lumières (25) de guidage dudit écran (17) sensiblement identiques,
et **en ce que** ledit support central (22) est non aligné avec lesdits deux supports latéraux (21).

3. Dispositif selon l'une quelconque des revendications 1 ou 2, **caractérisé en ce que** lesdits moyens d'indexation comprennent au moins une navette (31) coulissant dans un desdits rails (15,16) portant un levier (33) formant verrou (33) monté à rotation sur ladite navette (31).

4. Dispositif selon la revendication 3, **caractérisé en ce que** lesdits moyens d'actionnement comprennent un axe de liaison (26) solidarisant ledit écran déflecteur (17) audits moyens d'indexation, guidé dans au moins une rainure rectiligne (29) formée dans l'un desdits rails (15,16), suivant l'axe de ce dernier, et solidarisé à un bras (351) dudit levier (33).

5. Dispositif selon la revendication 4, **caractérisé en ce que** ladite navette (31) est entraînée en coulissement dans ledit rail (15,16) par un ergot (34) solidaire d'un câble (35) d'entraînement dudit panneau mobile (13) ladite navette (31) comprenant des moyens de rappel (37) agissant sur ledit ergot (34), et ledit ergot (34) étant apte à faire basculer ledit levier (33).

6. Dispositif selon la revendication 1, **caractérisé en ce que** lesdits moyens d'indexation comprennent un patin (57) coulissant dans ledit rail (44), et solidarisé audit élément de guidage (51, 52) par l'intermédiaire d'une biellette de transmission (56).

7. Dispositif selon la revendication 6 **caractérisé en ce qu'**il comprend des moyens de rappel (514) agissant sur ledit patin (57) de sorte à replacer ledit écran (45) dans ladite position déployée.

8. Dispositif selon la revendication 7, **caractérisé en ce que** lesdits moyens de rappel (514) comprennent un ressort (514) fixé par une de ses extrémités audit rail (44).

9. Dispositif selon l'une quelconque des revendications 6 à 8, **caractérisé en ce que** ledit patin (57) présente une portion formant butée pour ledit panneau mobile (43) de sorte que lorsque ledit panneau mobile (43) coulisse entre une position d'ouverture et ladite position fermée, ledit panneau mobile (43) entraîne ledit patin (57) dans ledit rail (44) entre ladite position déployée et ladite position escamotée.

10. Dispositif selon l'une quelconque des revendications 6 à 9, **caractérisé en ce que** ledit patin (57) présente une gorge (59) de verrouillage dans laquelle pénètre un élément (58) solidaire dudit panneau mobile (43), dans ladite position escamotée.

11. Dispositif selon l'une quelconque des revendications 1 à 10, **caractérisé en ce que** ladite lumière (25;53,54) présente un décrochement configuré de sorte que, dans ladite position déployée, ledit écran déflecteur (17;45) conserve cette position déployée si un effort est exercé sur ledit écran (17;45) selon une direction verticale.

12. Dispositif selon l'une quelconque des revendications 1 à 11, **caractérisé en ce qu'**au moins une portion substantielle desdits moyens d'entraînement est logée dans ledit ou lesdits rails (15;16;44).

13. Véhicule automobile comprenant au moins un dispositif selon l'une des revendications 1 à 12.

## Patentansprüche

1. Vorrichtung, die wenigstens einen Teil eines Verdecks (10) eines Automobilfahrzeugs bildet, die ein festes, verglastes Paneel (11; 41) und wenigstens ein bewegliches, verglastes Paneel (13; 43) aufweist, das geeignet ist, eine in dem festen Paneel (11; 41) vorgesehene Öffnung (12) zu verschließen, wobei das bewegliche Paneel (13; 43) gleitend im Inneren des Fahrzeugs entlang zweier Schienen (15, 16; 44), die mit dem festen Paneel (11; 41) verbunden sind, geführt wird und wobei die Schienen (15, 16; 44) angepasst sind, das bewegliche Paneel (13; 43) in der durch das feste Paneel (11; 41) definierten Ebene in eine geschlossene Position zurückzuführen,
wobei das feste Paneel (11; 41) bestimmt ist, durch Verbindung der Außenkontur des festen Paneels (11; 41) mit einem für diesen Effekt vorgesehenen, aus der Karosserie ausgesparten Rand (14), der einen Sitz zur Aufnahme der Außenkontur definiert, auf bündige Weise in die Karosserie des Fahrzeugs eingebracht zu werden,
**dadurch gekennzeichnet, dass** sie umfasst:
- eine Umlenkeinrichtung (20), die einen beweglichen Schirm (17; 45) zwischen einer eingefahrenen Position, in welcher der Schirm (17; 45) in etwa an der Fläche des festen Paneels (11; 41), die dem Inneren des Fahrzeugs zugewandt ist, angeordnet ist und einer außerhalb des Fahrzeugs ausgebreiteten Position aufweist,
- Betätigungsmittel des Schirms (17; 45), die mit dem beweglichen Paneel (13; 43) kooperieren und Mittel zur Indexierung der eingefahrenen und ausgebreiteten Positionen zu den geschlossenen und geöffneten Positionen des beweglichen Paneels (13; 43) aufweisen und die in den Schienen (15, 16; 44) durch die Antriebsmittel des beweglichen Paneels (13; 43) geführt werden, und
- wenigstens einen an dem festen Paneel (11; 41) befestigten Träger (21, 22; 55), der einen Führungskanal (25; 53, 54) umfasst, in welchem ein Führungselement (24; 51, 52), das mit dem Umlenkschirm (17; 45) verbunden ist, geführt wird, um den Letzteren zwischen der eingefahrenen Position und der ausgebreiteten Position zu führen, wobei der Führungskanal (25; 53, 54) wenigstens einen gebogenen Abschnitt (25; 53, 54) umfasst.

2. Vorrichtung nach Anspruch 1, **dadurch gekennzeichnet, dass** sie einen zentralen Träger (22) und zwei an dem festen Paneel (11) befestigte seitliche Träger (21), die in etwa identische Führungskanäle (25) des Schirms (17) aufweisen, umfasst,
und dadurch, dass der zentrale Träger (22) nicht mit den zwei seitlichen Trägern (21) ausgerichtet ist.

3. Vorrichtung nach einem der Ansprüche 1 oder 2, **dadurch gekennzeichnet, dass** die Mittel zur Indexierung wenigstens ein Schiffchen (31) aufweisen, das in einer der Schienen (15, 16) gleitet und das einen Hebel (33) trägt, der eine Verriegelung (33) bildet, die rotierbar auf dem Schiffchen (31) montiert ist.

4. Vorrichtung nach Anspruch 3, **dadurch gekennzeichnet, dass** die Betätigungsmittel eine den Umlenkschirm (17) mit den Mitteln zur Indexierung verbindende Verbindungsachse (26) aufweisen, die in wenigstens einer geradlinigen Nut (29), die in einer der Schienen (15, 16) gebildet ist, die der Achse des Letzteren folgt, geführt wird und mit einen Arm (331) des Hebels (33) verbunden ist.

5. Vorrichtung nach Anspruch 4, **dadurch gekennzeichnet, dass** das Schiffchen (31) gleitend in der Schiene (15, 16) durch eine Nocke (34), die mit einem Antriebskabel (35) des beweglichen Paneels (13) verbunden ist, angetrieben wird, wobei das Schiffchen (31) Rückstellmittel (37) aufweist, die auf die Nocke (34) wirken, und wobei die Nocke (34) geeignet ist, den Hebel (33) kippen zu lassen.

6. Vorrichtung nach Anspruch 1, **dadurch gekennzeichnet, dass** die Mittel zur Indexierung einen Schlitten (57) aufweisen, der in der Schiene (44) gleitet und mit dem Führungselement (51, 52) über ein Übertragungsschaltgestänge (56) verbunden ist.

7. Vorrichtung nach Anspruch 6, **dadurch gekennzeichnet, dass** sie Rückstellmittel (514) aufweist, die derart auf den Schlitten (57) wirken, dass der Schirm (45) in die ausgebreitete Position zurückversetzt wird.

8. Vorrichtung nach Anspruch 7, **dadurch gekennzeichnet, dass** die Rückstellmittel (514) eine Feder (514) aufweisen, die mit einem ihrer Enden an der Schiene (44) befestigt ist.

9. Vorrichtung nach einem der Ansprüche 6 bis 8, **dadurch gekennzeichnet, dass** der Schlitten (57) einen Abschnitt aufweist, der einen Anschlag für das bewegliche Paneel (43) aufweist, derart, dass, wenn das bewegliche Paneel (43) zwischen einer geöffneten Position und der geschlossenen Position gleitet, das bewegliche Paneel (43) den Schlitten (57) in der Schiene (44) zwischen der ausgebreiteten Position und der eingefahrenen Position antreibt.

10. Vorrichtung nach einem der Ansprüche 6 bis 9, **dadurch gekennzeichnet, dass** der Schlitten (57) eine Verriegelungsrille (59) umfasst, durch welche in der eingefahrenen Position ein Element (58) dringt, das mit dem beweglichen Paneel (43) verbunden ist.

11. Vorrichtung nach einem der Ansprüche 1 bis 10, **dadurch gekennzeichnet, dass** der Kanal (25; 53, 54) eine derart konfigurierte Abweichung umfasst, dass, in der ausgebreiteten Position, der Umlenkschirm (17; 45) diese ausgebreitete Position konserviert, wenn eine Kraft auf den Schirm (17; 45) gemäß einer vertikalen Richtung ausgeübt wird.

12. Vorrichtung nach einem der Ansprüche 1 bis 11, **dadurch gekennzeichnet, dass** wenigstens ein wesentlicher Teil der Antriebsmittel in der oder den Schienen (15, 16; 44) angeordnet ist.

13. Automobilfahrzeug, das wenigstens eine Vorrichtung nach einem der Ansprüche 1 bis 12 aufweist.

## Claims

1. Device forming at least one portion of a roof (10) of a motor vehicle, said device comprising a glazed fixed panel (11; 41) and at least one glazed movable panel (13; 43) which is capable of closing an opening (12) arranged within the said fixed panel (11; 41), the said movable panel (13; 43) being guided in sliding motion on the inside of the said vehicle along two rails (15, 16; 44) which are integral with the said fixed panel (11; 41), the said rails (15, 16; 44) being adapted to bring the said movable panel (13; 43) back into the plane defined by the said fixed panel (11; 41) when in a closed position,
the said fixed panel (11; 41) being intended to be added on in a manner flush with the body of the said vehicle by the fastening of the outer contour of the said fixed panel (11; 41) onto a border (14) which is provided for that purpose in a recessed manner on the body and defines a housing for receiving the said outer contour,
**characterised in that** said device comprises:
- a deflector system (20) comprising a screen (17; 45) which is movable between a retracted position, in which the said screen (17; 45) is housed substantially against that face of the said fixed panel (11; 41) which faces towards the interior of the said vehicle, and a deployed position on the outside of the said vehicle;
- means for operating the said screen (17; 45) which cooperate with the said movable panel (13; 43) and comprise means for indexing the said retracted and deployed positions at closed and open positions of the said movable panel (13; 43), which are guided within the said rails (15, 16; 44) by means for driving the said movable panel (13; 43); and
- at least one support (21, 22; 55) which is fixed to the said fixed panel (11; 41) and has a guide aperture (25; 53, 54) within which there is guided a guide element (24; 51, 52) which is integral with the said deflector screen (17; 45), in such a way as to guide the latter between the said retracted position and the said deployed position, the said guide aperture (25; 53, 54) having at least one curved portion (25; 53, 54).

2. Device according to claim 1, **characterised in that** it comprises a central support (22) and two lateral supports (21) which are fixed to the said fixed panel (11) and have substantially identical apertures (25) for guiding the said screen (17),
and **in that** the said central support (22) is non-aligned with the said two lateral supports (21).

3. Device according to either of claims 1 or 2, **characterised in that** the said indexing means comprise at least one shuttle (31) which slides within one of the said rails (15, 16) and carries a lever (33) forming a bolt (33) which is mounted for rotation on the said shuttle (31).

4. Device according to claim 3, **characterised in that** the said operating means comprise a linking spindle (26) which fastens the said deflector screen (17) to the said indexing means, is guided within at least one straight groove (29) formed in one of the said rails (15, 16), along the axis of the latter, and is fastened to one arm (331) of the said lever (33).

5. Device according to claim 4, **characterised in that** the said shuttle (31) is driven in sliding motion within the said rail (15, 16) by a pin (34) which is integral with a cable (35) for driving the said movable panel (13), the said shuttle (31) comprising return means (37) which act upon the said pin (34), and the said pin (34) being capable of causing the said lever (33) to rock.

6. Device according to claim 1, **characterised in that** the said indexing means comprise a runner (57) which slides within the said rail (44) and is fastened to the said guide element (51, 52) via a transmission rod (56).

7. Device according to claim 6, **characterised in that** it comprises return means (514) which act upon the said runner (57) in such a way as to relocate the said screen (45) in the said deployed position.

8. Device according to claim 7, **characterised in that** the said return means (514) comprise a spring (514) which is fixed by one of its ends to the said rail (44).

9. Device according to any of claims 6 to 8, **characterised in that** the said runner (57) has a portion forming a stop for the said movable panel (43) in such a way that, when the said movable panel (43) slides between an opening position and the said closed position, the said movable panel (43) drives the said runner (57) within the said rail (44) between the said deployed position and the said retracted position.

10. Device according to any of claims 6 to 9, **characterised in that** the said runner (57) has a locking channel (59) into which an element (58) which is integral with the said movable panel (43) penetrates in the said retracted position.

11. Device according to any of claims 1 to 10, **characterised in that** the said aperture (25; 53, 54) has a recess which is configured in such a way that, in the said deployed position, the said deflector screen (17; 45) maintains this deployed position if a force is exerted upon the said screen (17; 45) in a vertical direction.

12. Device according to any of claims 1 to 11, **characterised in that** at least a substantial portion of the said driving means is housed within the said rail or rails (15, 16; 44).

13. Motor vehicle comprising at least one device according to one of claims 1 to 12.
